# EUROPEAN PATENT APPLICATION

(11) **EP 1 748 535 A2**
(43) Date of publication of application: **31.01.2007**
(21) Application number: 06011443.6
(22) Date of filing: 02.06.2006
(51) Int. Cl.: H02K 3/52

(54) **Motor unit in weft feeders for textile machines**

(30) Priority: 28.07.2005 IT TO20050528
(71) Applicant: L.G.L. Electronics S.p.A., 24024 Gandino (Bergamo) (IT)
(72) Inventor: Gotti, Andrea, 24021 Albino (BG) (IT); Gotti, Luca, 24021 Albino (BG) (IT); Castelli, Rosario, 24024 Gandino (BG) (IT)
(74) Representative: Spandonari, Carlo

(57) **Abstract**

A brushless motor (14, 56) provided with a hollow cylindrical stator (16, 64) has three pole shoes having respective excitation coils wound thereon (18, 66). A driving shaft (20, 58) is inserted in the stator (16, 64) and supports a magnetic element arranged near the coils and having a circular profile with alternating poles. A printed circuit board (32, 78), to which the connection ends of the coils (18) are soldered, is supported near an axial end of the stator (16, 64) and is provided with a hole (36, 80) surrounding the driving shaft.

## Description

The present invention relates to a motor unit in weft feeders for textile machines.

As known, the weft feeders generally are devices which receive the yarn from a spool and feed it, under a modulated tension, to a downstream machine, such as a loom, a knitting machine, a spooler, and the like.

In particular, the so-called "positive" weft feeders comprise a motor which drives a yarn-feeding reel having a number of yarn loops wound thereon. The feeder draws the yarn from the spool and feed it to the downstream machine, with a speed that obviously is proportional to the rotational speed of the motor, whereby the yarn speed is modulated by controlling the motor speed.

The so-called "negative" weft feeders comprise a stationary drum on which a motorized swivel arm winds a plurality of yarn loops forming a weft reserve. Upon request from the loom, the loops are unwound from the drum, then pass through braking means that modulate the tension of the unwinding yarn, and finally are fed to the loom. The weft reserve is maintained substantially constant by controlling the rotational speed of the motor.

In both the above types of weft feeders, the motor is driven by an electronic power supply unit consisting of a bridge of electronic switches controlled by a control unit, which processes various signals from external sensors and, on the basis of such signals, cyclically closes the switches of the electronic power supply unit in order to control the motor speed for the above mentioned purposes, wich are different in relation to the type of weft feeder concerned, ie., positive feeder or negative feeder. Such control units are substantially capable of operating in real time by means of circuits which implement voltage/current, nested control loops, which may be speed-controlled loops or position-controlled loops.

IT-A-TO2005000225 and IT-A-TO2005000256 respectively disclose the advantages deriving from providing the positive yarn feeders and the negative yarn feeders with a particular type of brushless motor. Such motors generally comprise a cylindrical hollow stator having three equally-spaced pole shoes having respective excitation coils wound thereon, and a rotor comprising a magnetic element having a circular profile with alternating poles, which is coaxially supported on the driving shaft near the coils. The control unit consists of a printed circuit board which arranged by side of the motor and to which the motor is electrically connected by wiring.

The above type of brushless motors mainly have the following advantages over the step motors and the conventional brushless motors: simpler construction, reduction of costs and sizes, higher efficiency, and easier integration of the Hall sensors which are used to detect the position of the motor.

It is now a main object of the present invention to improve the motor unit of both the positive and the negative weft feeders provided with brushless motors of the type described in the above prior documents, in order to achieve a further reduction in size and a higher reliability.

The above object and other advantages, which will better appear from the following description, are achieved by a weft feeder having the features recited in claim 1, while the dependent claims state other advantageous features of the invention.

The invention will be now described in more detail with reference to a few preferred, non exclusive embodiments, shown by way of non limiting example in the attached drawings, wherein:
Fig. 1 is a view in axial section of a positive yarn feeder provided with an improved motor unit according to the invention;
Fig. 2 is a perspective view of the yarn feeder of Fig. 1, in which certain parts are removed for better clarity of illustration;
Fig. 3 is a broken away view in side elevation of a negative yarn feeder provided with an improved motor unit according to the invention;
Fig. 4 is a broken away, rear elevation view of the negative yarn feeder of Fig. 3.

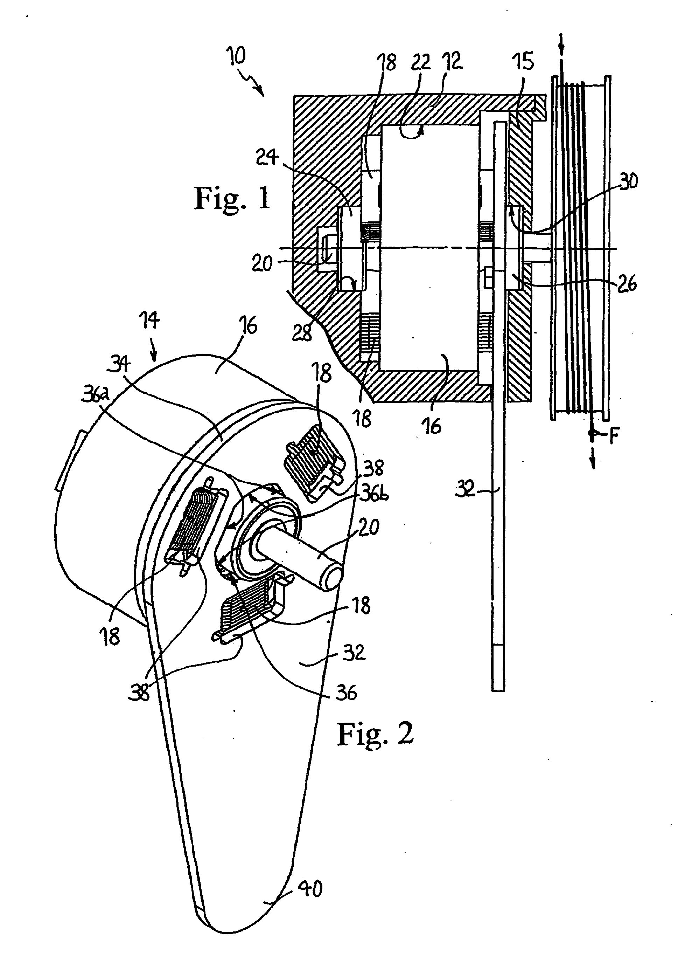

With initial reference to Figs. 1, 2, a positive yarn feeder 10 draws yarn F from an upstream spool (not shown) and feeds it, under modulated speed and tension, to a downstream machine, such as a loom, a knitting machine, a spooler, and the like (not shown). Feeder 10 comprises a hollow housing 12 having a brushless motor 14 of the type described in IT-A-TO2005000225 housed therein. One axial end of hollow housing 12 is closed by a cover 15. Motor 14 comprises a hollow cylindrical stator 16 housing three excitation coils 18. A driving shaft 20 is pivotally supported within cylindrical stator 16 and bears a magnetic element (not shown) arranged near the coils and having a circular profile with alternating poles. A more detailed description of the motor is given in the above-cited prior document, to which reference can be made.

Stator 16 is received within a cilindrical seat 22 of hollow housing 12. Driving shaft 20 is supported at the opposite ends of the stator on a pair of rolling bearings 24, 26 arranged in respective seats 28, 30 coaxial to cylindrical seat 22, which are formed in hollow housing 12 and in cover 13 respectively.

A printed circuit board 32 is arranged between cover 13 and the adjacent axial end of stator 16, and contains the circuitry for a motor control unit. The connection ends of the coils 18 are soldered to the printed circuit board. The designing of the control unit for the motor is within the ordinary skill of the person skilled in the art and, consequently, no further description will be given about it. Printed circuit board 32 has an elongated shape, with a first rounding end edge 34 having a profile that substantially matches with the outer circular profile of stator 16, with a central hole 36 that surrounds rolling bearing 26 along a free axial end thereof. Hole 36 has three rectilinear sides 36a which are inclined at equal angles with respect to each other and are interconnected by rounding sections 36b. Hole 36 is surrounded by three equally-spaced rectangular openings 38 in which respective, longitudinally projecting ends of the coils 18 are received. Printed circuid board 32 has an opposite, second rounding end edge 40 smaller in diameter than the first one.

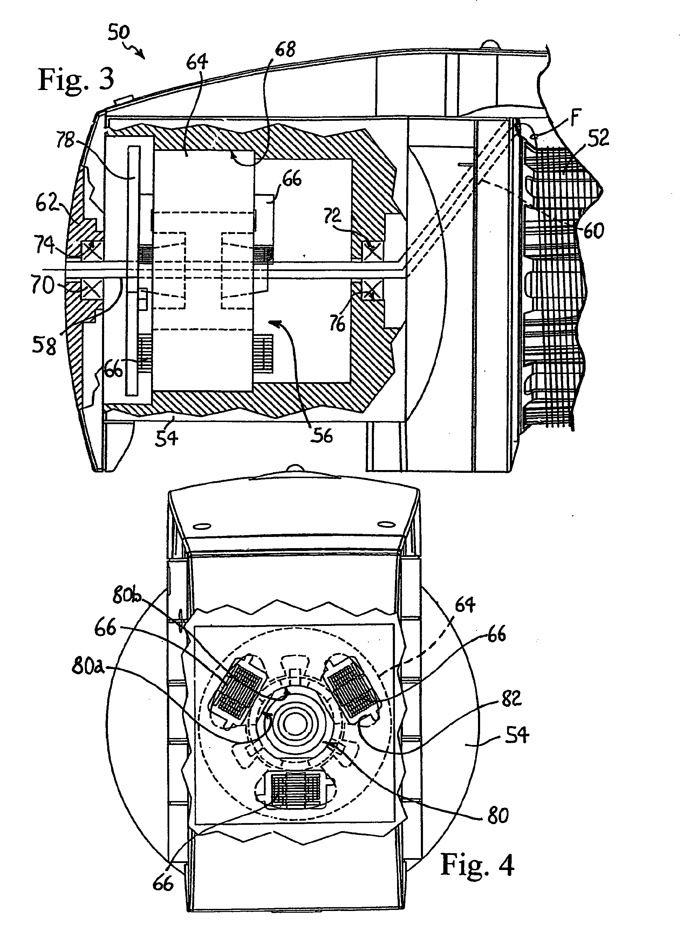

Having now reference to Figs. 3, 4, a negative yarn feeder 50 draws yarn F from an upstream spool (not shown) and feeds it, under a regulated tension, to a downstream machine, such as a loom, a knitting machine, a spooler, and the like (not shown). Feeder 50 comprises a stationary drum 52 supported on a motor housing 54 having a brushless motor 56 of the type described in IT-A-TO2005000225 housed therein. The motor is provided with a hollow driving shaft 58 arranged coaxial to drum 54. A hollow swivel arm 60 is operatively connected to one end of driving shaft 58 and is driven to wind a plurality of yarn loops on drum 54, thereby forming a weft reserve. Upon request from the loom, the loops are unwound from drum 54, than pass through a braking device (not shown) which modulates the tension of the unwinding yarn, and then is fed to the loom. The weft reserve is maintained substantially constant by controlling the rotational speed of the motor. The rear end of hollow housing 52 is closed by a transverse wall 62. Similarly to the previous embodiment, motor 56 comprises a hollow cylindrical stator 64 housing three excitation coils 66. Driving shaft 58 is pivotally supported within cylindrical stator 64 and bears a magnetic element arranged near the coils and having a circular profile with alternating poles (not shown). A more detailed description of the motor is given in the above-cited prior document, to which reference can be made.

Stator 64 is arranged within a cylindrical seat 68 of motor housing 52, while driving shaft 58 is supported at the opposite ends of the stator on a pair of rolling bearings 70, 72 arranged in respective seats 74, 76 coaxial to cylindrical seat 68, which are formed in motor housing 52 and in rear transverse wall 62 respectively.

A printed circuit board 78 is arranged between transverse wall 62 and the adjacent axial end of motor 56, and contains the circuitry for a motor control unit. The connection ends of the coils 66 are soldered to the printed circuit board. The deigning of the motor control unit is within the ordinary skill of the person skilled in the art and, consequently, no further description will be given about it. Printed circuit board 78 has a square profile, with a central hole 80 that surrounds driving shaft 58. Hole 80 has three rectilinear sides such as 80a which are inclined at equal angles with respect ot each other and are interconnected by rounded sections 80b. Hole 80 is surrounded by three equally-spaced rectangular openings 82 in which respective longitudinally projecting ends of coils 66 are received.

As the person skilled in the art will immediately understand, the above described motor unit, including the motor and the printed circuit board that is frontally applied thereto, allows a considerable reduction in size, with an advantageous use of the inner room of the motor housing.

Furthermore, the elimination of cables and connectors for connecting the motor to the printed circuit board results in a reduction in the costs, as well as in a higher realiability - due to the elimination of the wiring - and in a reduction of the magnetic noises - which cause drawbacks well known in the field- because shorter cables are used.

A few preferred embodiments have been described herein, but of course many changes are possible within the scope of the inventive concept.

## Claims

1. A motor unit in weft feeders for looms, comprising a brushless motor (14, 56) provided with a hollow cylindrical stator (16, 64) having at least three pole shoes with respective excitation coils wound thereon (18, 66), and a driving shaft (20, 58) inserted in the stator (16, 64) and supporting a magnetic element arranged near the coils and having a circular profile with alternating poles, **characterized in that** a printed circuit board (32, 78), to which the connection ends of the coils (18) are soldered, is supported near an axial end of the stator (16, 64) and is provided with a hole (36, 80) surrounding the driving shaft.

2. The motor unit of claim 1, wherein said coils (18, 66) longitudinally project on the side of the printed circuit board (32, 78), **characterized in that** said printed circuit board has openings (38, 82) in which the projecting coils are received.

3. The motor unit of claim 1 or 2, **characterized in that** said driving shaft (20) is supported on a pair of rolling bearings (24, 26) arranged at the opposite ends of, and adjacent to, the stator (16), and **in that** said hole (36) is sized to surround a free axial portion of the rolling bearing (26) on the side of the printed circuit board.

4. The motor unit of any of claim 1 to 3, **characterized in that** said hole (36) has three rectilinear sides (36a) which are inclined at equal angles with respect to each other and are interconnected by rounding sections (36b).
